# EUROPÄISCHE PATENTSCHRIFT

(11) **EP 3 221 935 B1**
(45) Veröffentlichungstag und Bekanntmachung des Hinweises auf die Patenterteilung: **31.03.2021**
(21) Anmeldenummer: 15791672.7
(22) Anmeldetag: 11.11.2015
(51) Int. Cl.: H01R 43/24, H01R 13/50

(54) **ELEKTRISCHE VERBINDUNGSANORDNUNG UND VERFAHREN ZU DEREN HERSTELLUNG**
ELECTRICAL CONNECTION ARRANGEMENT AND METHOD FOR PRODUCTION THEREOF
DISPOSITIF DE LIAISON ÉLECTRIQUE ET PROCÉDÉ DE PRODUCTION DUDIT DISPOSITIF DE LIAISON ÉLECTRIQUE

(30) Priorität: 18.11.2014 DE 102014116838
(43) Veröffentlichungstag der Anmeldung: 27.09.2017
(73) Patentinhaber: EBM-Papst Mulfingen GmbH&CO. KG, 74673 Mulfingen (DE)
(72) Erfinder: MÜNZ, Martin, 74673 Mulfingen-Hollenbach (DE); FRIEDLEIN, Florian, 74747 Ravenstein-Hüngheim (DE)
(74) Vertreter: Staeger & Sperling Partnerschaftsgesellschaft mbB
(86) Internationale Anmeldenummer: PCT/EP2015/076361
(87) Internationale Veröffentlichungsnummer: WO 2016/078990

(56) Entgegenhaltungen:
- WO-A1-2012/033217
- FR-A1- 2 741 751
- US-A- 5 685 069
- US-B1- 6 371 817

## Beschreibung

Die Erfindung betrifft eine elektrische Verbindungsanordnung für einen Motor, sowie ein Verfahren zum Herstellen einer solchen Verbindungsanordnung. Die Erfindung betrifft insbesondere eine elektrische Motoranbindung, die eine kompakte Konstruktion zum Anschluss an einen Motor mit wenigen Einzelteilen aufweist.

Im Stand der Technik sind Leitungssätze zum Anschluss an Motoren oder allgemein Motoranschlussleitungen bekannt. In der Regel bestehen diese aus zwei Steckverbindern mit einer zwischen den beiden Steckverbindern angeordneten Leitung. Die Polzahl und demnach die Anzahl der Anschlüsse bzw. Kontakte der Steckverbinder richtet sich nach den Anforderungen der speziellen Motorapplikation. In der Regel werden Powerleitungen zur Übertragung der Leistungsströme und ggf. Steuerleitungen oder Signalleitungen zur Signalübertragung in einem Kabelsatz vereint. Die Kontakte der Steckverbinder stellen handelsübliche Kontakte dar, die entweder als Schraubkontakte oder Crimpkontakte ausgebildet sind oder über eine andere geeignete Anschlussgeometrie oder Verbindung verfügen. So kann die eine Seite des Kabelsatzes zum Beispiel auch mit einem an einer Motaranschlusseinrichtung anschließbarem (freien) Kabelende ausgestattet sein, was einen zusätzlichen Montageschritt erfordert.

Weiter nachteilig ist, dass die Qualität z.B. von Crimpverbindungen an Crimpkontakten von deren korrekter Montage abhängt und einen zusätzlichen Prüfaufwand erfordert. Weiterhin sind handelsübliche Steckverbinder oftmals komplex und aus vielen Einzelteilen aufgebaut, die es korrekt zu montieren gilt. Insgesamt nachteilig bei solchen Konstruktionen ist daher die hohe Teilezahl, der hohe Montageaufwand und der Prüf- und Kontrollaufwand.

Aus der JP 2010099457 ist ein Fahrzeugkabelsatz bekannt, der auf einfache Weise, zwecks Biege-und Knickschutz zusätzlich mit einem massiven Element ausgestattet ist, wobei allerdings eine insgesamt hohe Teilezahl an zusammenbaubaren Einzelteilen benötigt wird.

Eine alternative Möglichkeit, einen Motor oder eine elektrische Leistungseinheit mit Leistung (d. h. hohen Strömen) zu versorgen, besteht in der Verwendung von Stromschienen.

Aus der Druckschruft FR 2 741 751 A1 ist bereits eine starre elektrische Verbindungsleitung für einen Motoranschluss bekannt bei der eine Leitungsschiene aus zwei Leitungen mit einem gemeinsamen Isolationsmaterial umgeben sind.

Aus der Druckschrift WO 20121033217 A1 ist eine weitere Leitungsanordnung aus mehreren nebeneinander verlaufenden Leitungen bekannt.

Aus der DE 4312423 B4 ist eine Stromschiene für Steckdosenboxen, bestehend aus einem Flachmetallmaterial gezeigt. Allerdings ist die Stromschiene lediglich als einpolige Schiene ausgebildet und es fehlen Vorrichtungen gegen direktes Berühren, Isolationsteile und auch Abdichtungen gegen Feuchtigkeit und andere Umwelteinflüsse. In der DE 10 2008 050 004 A1 ist eine weitere Ausführungsform einer Stromschiene gezeigt, die ebenfalls die vorbesagten Nachteile aufweist.

Es besteht ein zunehmendes Bedürfnis danach, fertig konfektionierte Montagebaugruppen bereitzustellen, um die Anschlussaufgaben kostengünstig und einfach zu bewerkstelligen. So ist aus der EP 1 777 789 B1 eine vormontierte elektrische Installationseinheit bekannt, die allerdings komplex aufgebaut ist und sich nicht ohne weiteres auf Motoranwendungen übertragen lässt.

Bei der vorliegenden Erfindung sind ferner weitere Randbedingungen, wie Bauraum, Gehäuse, Toleranzen etc. zu berücksichtigen, die Motorenapplikationen innewohnen. Folglich lassen sich die am Markt vorhandenen Lösungen nicht oder jedenfalls nicht ohne weiteres auf Motorapplikationen übertragen.

Vor diesem Hintergrund ist es Aufgabe der vorliegenden Erfindung vorbesagte Nachteile zu überwinden und eine elektrische Verbindungsanordnung für einen Motor, sowie ein Verfahren zum Herstellen einer solchen Verbindungsanordnung bereitzustellen, welche als vormontierte Installationseinheit verwendbar ist, möglichst wenig Bauteile benötigt und deren Herstellung und Verwendung einen geringen Montage- und Prüfaufwand nach sich zieht.

Diese Aufgabe wird gelöst mit einer elektrischen Verbindungsanordnung mit den Merkmalen von Anspruch 1, sowie einem Verfahren zum Herstellen einer solchen Verbindungsanordnung gemäß den Merkmalen von Anspruch 10.

Der Grundgedanke der vorliegenden Erfindung ist es, eine montagefertige Baugruppe vorzusehen, bei der die beiden Anschlussseiten mit ihren Anschlüssen (Kontakten) als auch die Verbindung dazwischen als einstückige, vorzugsweise starre Verbindungsanordnung aus einer Anzahl von starren miteinander verbundener Leitungselementen besteht, die vorzugsweise mittels eines gemeinsamen elektrischen Isoliermaterial umspritzt sind. Auf diese Weise muss kein Verbindungskabel mit seinen Anschlussenden zwischen oder an die beiden Anschlussenden angeordnet werden. Daher können auch z. B. Crimpkontakte oder andere konfektionierbare Verbindungsanschlüsse entfallen, um einen Motor anzuschließen. Ferner wird der Montageaufwand deutlich reduziert und vereinfacht. Auch die Fehleranfälligkeit wegen ggf. mangelhafter Montage kann so reduziert werden, da lediglich die fertige Baugruppe installiert werden muss.

Erfindungsgemäß wird demnach eine elektrische Verbindungsanordnung für einen Motor bereitgestellt, umfassend eine erste endseitig angeordnete elektrische Anschlussvorrichtung mit elektrischen Anschlüssen (Kontakten), vorzugsweise ausgebildet mit Kontakten zum Einstecken einer Steckverbindung sowie eine zweite endseitig angeordnete elektrische Anschlussvorrichtung mit elektrischen Anschlüssen (Kontakten), vorzugsweise ausgebildet als Kontakte zum Einstecken oder direkten Verbinden mit einer Steckverbindung sowie ein mit den Anschlüssen einstückig ausgebildete, die beiden Anschlussvorrichtungen verbindende Leitungsschiene, wobei die Leitungsschiene und zumindest Teile der Anschlussvorrichtungen gemeinsam mit einem Isoliermaterial umgeben und zueinander isoliert ausgebildet sind.

Die Anschlussvorrichtungen, sind daher mit Vorteil, wie später in der Figurenbeschreibung noch näher erläutert, Anschlussvorrichtungen, an die bestimmungsgemäß eine widerlösbare Steckverbindung eingesteckt oder damit verbunden wird.

Mit Vorteil ist weiter vorgesehen, dass die Leitungsschiene mehrere Leitungsbahnen aufweist, wobei die Leitungsbahnen jeweils an ihrem einen Ende einstückig mit einem der Anschlüsse und jeweils an ihrem anderen Ende einstückig mit einem der anderen Anschlüsse ausgebildet sind. Anders ausgedrückt, weisen die Leitungsbahnen an ihren beiden Enden jeweils einen Anschluss mit Kontakten auf. Der Anschluss an dem jeweiligen einen Ende dient dem Anschluss an einem Motor (mit vorzugsweise einem Motorstecker) und der andere Anschluss an dem jeweiligen anderen Ende, dem Anschluss an eine kundenseitige Lösung z. B. eine Steckbuchse an einem anzuschließenden Motorsteuergerät.

In einer bevorzugten Ausführungsform der Erfindung ist weiter vorgesehen, dass das Isoliermaterial auch zwischen den Leitungsbahnen und zwar die Leitungsbahnen umschließend vorgesehen ist. So kann einerseits ein Berührschutz nach Außen gewährleistet werden, während gleichzeitig auch eine elektrische Isolierung zwischen den Leitungsbahnen gewährleistet wird. Das ausgewählte Isoliermaterial und insbesondere die gewählte Dicke oder Stärke der Isolierung, sind unter anderem an die jeweiligen Isolationsanforderungen und die speziellen Anforderungen an z. B. eine einfache, doppelte oder verstärkte Isolierung anzupassen. Ferner richtet sich die Auswahl des Kunststoffmaterials nach der Isolationsstoffgruppe und anderen Kennwerten.

In einer besonders bevorzugten Ausführungsform der Erfindung wird als Isoliermaterial ein spritzfähiger Kunststoff verwendet und die Leitungsschiene mit dem Isoliermaterial mittels eines Kunststoffspritzverfahren umspritzt. Sofern ein eigens hierfür konzipiertes Werkzeug verwendet wird, kann hierdurch eine reproduzierbare Qualität für hohe Stückzahlen gewährleistet werden.

Erfindungsgemäß ist in einer Weiterentwicklung der Erfindung vorgesehen, dass die Anschlüsse der Anschlussvorrichtung mittels eines Verbindungssteges einstückig miteinander verbunden sind. Auf diese Weise kann eine Lagefixierung bei der Herstellung der elektrischen Verbindungsanordnung sichergestellt werden. Weiter bevorzugt ist es, wenn zwischen dem Verbindungssteg und den jeweiligen Anschlüssen bestimmungsgemäß eine Sollbruchstelle vorgesehen ist. So kann nach Fertigstellung der gesamten Montagebaugruppe, d. h. der elektrischen Verbindungsanordnung die elektrische Trennung, der bis dahin noch elektrisch und mechanisch verbundenen Anschlüsse und demzufolge Leitungsbahnen dadurch erfolgen, dass der jeweilige Verbindungssteg an der Sollbruchstelle durchtrennt wird.

In einer besonders vorteilhaften Ausführungsform der Erfindung ist vorgesehen, dass die gesamte Leitungsschiene als starre Leitungsschiene, vorzugsweise als eine einstückige, aus Aluminium-Druckgussmaterial gegossene, starre Leitungsschiene ausgebildet ist.

In einer weiter bevorzugten Ausführungsform der Erfindung ist vorgesehen, dass die Anschlussvorrichtung eine die Anschlüsse umgebende Steckkontur umfasst, die aus einem Isoliermaterial, vorzugsweise einstückig mit dem Isoliermaterial ausgebildet wird. So ist es denkbar, dass an einen oder beiden Anschlussseiten jeweils ein Anschlussverbindergehäuse oder eine für den Anschluss ausgebildete korrespondierende Gegenkontur einstückig mit angespritzt wird. Auf diese Weise wird eine besonders kompakte und wenige Einzelteile aufweisende Montagebaugruppe erhalten.

Es kann erfindungsgemäß weiter vorgesehen sein, dass die Anschlussvorrichtung einen flachen Flansch aufweist, an den sich eine mit dieser einstückig ausgebildeten Steckkontur anschließt, welche einen Aufnahmeraum für die Anschlüsse bildet und stirnseitig über die Anschlüsse hervorsteht. Alternativ können auch andere, an die jeweilige Applikation angepasste Anschlussverbindergehäuseformen vorgesehen werden, die einstückig ausgebildet sind. In einer weiter alternativen Ausführungsform kann auch eine zweifache oder mehrfache Umspritzung mit je einem für die betroffenen Eigenschaften des so hergestellten Teilbereichs erforderlichem Kunststoffmaterial erfolgen.

In einer ebenfalls vorteilhaften Ausführungsform der Erfindung ist vorgesehen, dass die Leitungsschiene eine von dem Isoliermaterial umfangsgeschlossene, sich entlang einer Erstreckungsrichtung S in Längsrichtung erstreckende, im Wesentlichen stabförmige Form aufweist. So kann eine kompakte Bauform erzielt werden. Andererseits können im Verlauf der leitungsschiene auch bestimmungsgemäße Abwinkelungen und/oder Biegungen vorgesehen werden, um die Form der fertigen Montagebaugruppe optimal der Applikation anzupassen.

Ein weiterer Aspekt der vorliegenden Erfindung betrifft das Verfahren zum Herstellen einer wie zuvor beschriebenen elektrischen Verbindungsanordnung mit den folgenden Schritten:
a. Herstellen einer einstückigen Leitungsschiene mit mehreren Leitungsbahnen und endseitigen Anschlüssen, wobei die Anschlüsse an oder benachbart zu einem Ende der Ansschlüsse mittels eines Verbindungssteges einstückig miteinander verbunden sind;
b. Umspritzen der Leitungsschiene zur gegenseitigen Isolierung der Leitungsbahnen untereinander und zur Ausbildung von zwei endseitigen Anschlussvorrichtungen mit zugänglichen Anschlüssen.

Eine bevorzugte Weiterbildung des erfindungsgemäßen Verfahrens besteht darin, dass eine der Anschlussvorrichtungen mit wenigstens einer einseitig offenen Steckkontur ausgebildet wird, welche einen Aufnahmeraum für die Anschlüsse ausbildet und stirnseitig über die Anschlüsse hervorsteht.

So kann weiter vorgesehen werden, dass eine der Anschlussvorrichtungen mit einer an die jeweilige Applikation angepasste Anschlussverbindergehäuseform hergestellt wird, z. B. beim Umspritzen kann eine der Anschlussvorrichtungen mit einer Anschlusskontur mit einer stirnseitigen Flachseite zur Anlage gegen eine Gegenkontur am Motoranschlussblock ausbildet werden aus der die Anschlüsse stirnseitig herausragen und motoranschlussseitig kontaktiert werden können.

Das Verfahren ist mit Vorteil dahingehend ausgebildet, dass bei der Herstellung in Schritt a) zwischen dem Verbindungssteg und den Anschlüssen eine Sollbruchstelle implementiert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine perspektivische Ansicht eines Ausführungsbeispiels einer erfindungsgemäßen elektrischen Verbindungsanordnung und
- Fig.2: eine Schnittansicht in Längs- und Querrichtung durch die Verbindungsanordnung gemäß Figur 1.

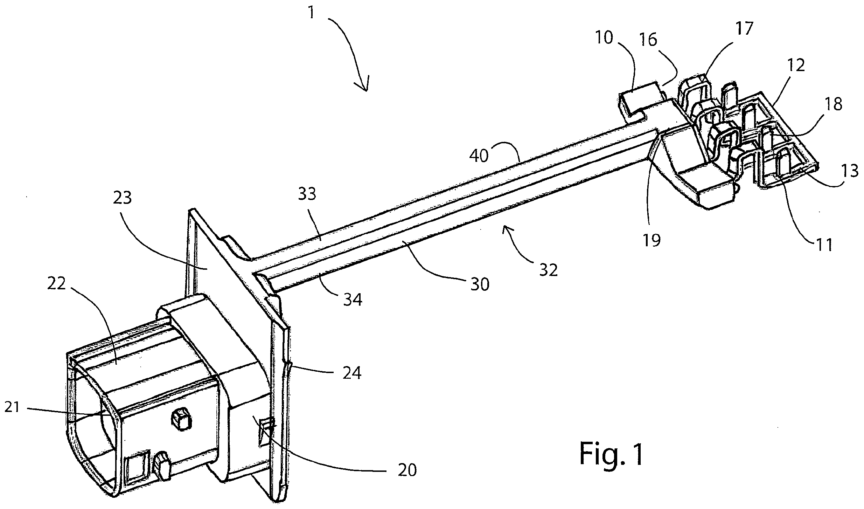

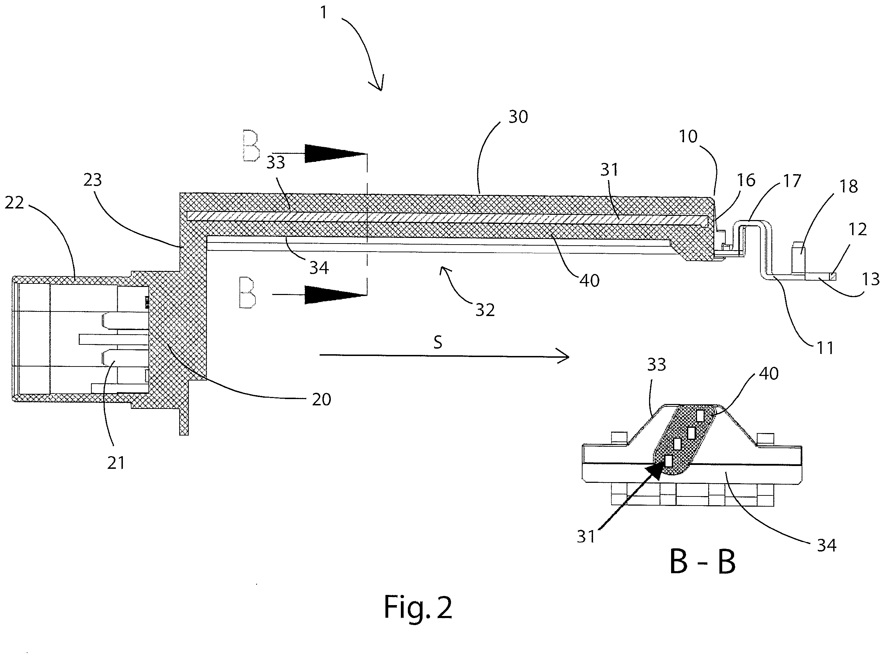

Im Folgenden wir ein beispielhaftes Ausführungsbeispiel einer erfindungsgemäßen elektrischen Verbindungsanordnung 1 mit Bezug auf die Figuren 1 und 2 beschrieben. Gezeigt ist in der Figur 1 die perspektivische Ansicht einer elektrischen Verbindungsanordnung 1, umfassend eine erste endseitig angeordnete elektrische Anschlussvorrichtung 10 mit elektrischen Anschlüssen 11 zum Anschluss an einen Motor (erste Steckverbindung 10) und eine zweite endseitig angeordnete elektrische Anschlussvorrichtung 20 mit elektrischen Anschlüssen 21, zum Anschluss an eine externe Vorrichtung (zweite Steckverbindung 20). Ferner ist ein mit den Anschlüssen 11 einstückig ausgebildete, die beiden Anschlussvorrichtungen 10, 20 verbindende Leitungsschiene 30 vorgesehen. Wie gut in der Figur 2 in der Schnittansicht erkennbar, sind die Leitungsschiene 30 und Teile der Anschlussvorrichtungen 10, 20 gemeinsam mit einem Isoliermaterial 40 umgeben. Das, die Anschlüsse 21 umgebende Gehäuse der Anschlussvorrichtung 20 ist einstückig aus dem Isoliermaterial 40 ausgebildet, welches die Leitungsschiene 30 umgibt. Die Leitungsschiene 30 ist in diesem Ausführungsbeispiel als eine starre, aus Aluminium-Druckgussmaterial gegossene Leitungsschiene ausgebildet.

Die Leitungsschiene 30 weist, wie in der rechten Schnittansicht der Figur 2 erkennbar, mehrere Leitungsbahnen 31 auf, wobei jede Leitungsbahn 31 jeweils an ihrem einen Ende einstückig einen der Anschlüsse 11 und jeweils an ihrem anderen Ende einstückig einen der Anschlüsse 21 ausbildet. Die Leitungsbahnen 31 sind jeweils in der Höhe unter einem schrägen Winkel zur Vertikalen zueinander versetzt und im Wesentlichen parallel zueinander angeordnet, wobei diese in den Bereichen der Anschlussvorrichtung entsprechend der Anschlusskontur ausgebildet sind.

Die Leitungsbahnen 31 sind zueinander elektrisch isoliert ausgebildet, indem ein Isoliermaterial 40 aus spritzfähigem Kunststoff beim Umspritzen bestimmungsgemäß in die Zwischenräume zwischen die Leitungsbahnen 31 eingebracht wird. Somit ist das Isoliermaterial 40 auch zwischen den Leitungsbahnen 30 die Leitungsbahnen 30 umschließend vorgesehen, um die notwendige Isolationsfestigkeit zu erzielen. Die Leitungsschiene 30 erstreckt sich mit einem Zentralabschnitt 32 entlang einer Erstreckungsrichtung S in Längsrichtung und weist in diesem Zentralabschnitt 32 eine im Wesentlichen stabförmige Form auf.

Wie in der Figur 1 dargestellt, ragen die jeweiligen Anschlüsse 11 aus der Stirnseite 16 der Anschlussvorrichtung 10 als U-förmiger Anschlussbereich 17 mit einem endseitig angebrachten, nach oben ragendem Kontaktteil 18 hervor. Wie in der Figur 1 und 2 ersichtlich, ist mit dem U-förmigen Anschlussbereich ein

Toleranzausgleich geschaffen, so dass Toleranzen bzw. auch Bewegungen in und quer zur Erstreckungsrichtung abgefangen werden können. Daran schließt sich quer zu den Anschlüssen 11 ein Verbindungssteg 12 an, der die Anschlüsse 11 über eine Sollbruchstelle 13 einstückig miteinander verbindet.

Wie in der Figur 1 und 2 ferner ersichtlich, ist die Unterseite jedes Anschlusses 11 im Bereich des nach oben ragenden Kontaktteils 18 flach ausgebildet, so dass auch eine Leiterplattenmontage möglich ist. Auf die vier nach oben stehenden Kontakte lässt sich ein Anschlussstecker aufstecken.

Die Anschlussvorrichtung 10 ist als ein Anschlussblock aus dem Isoliermaterial 40, mit einem trapezförmigen Mittelteil 19 gebildet.

Die Sollbruchstelle 13 bzw. die jeweiligen Sollbruchstellen 13 zwischen den Anschlüssen 11 und dem Verbindungssteg 12 kann auf jede geeignete Weise, zum Beispiel als Materialverjüngung ausgebildet sein, so dass eine Trennung auf einfache Weise möglich wird.

Die Anschlussvorrichtung 20 bildet eine die Anschlüsse 21 umgebende Stecckontur 22 aus, die aus dem Isoliermaterial 40 besteht. Die Anschlussvorrichtung 20 bildet ferner einen flachen Flansch 23 aus, aus dem sich die einseitig offene Steckkontur 22 weg erstreckt. Der Flansch 23 ist an einem oberen Flanschbereich mit dem im Wesentlichen linear verlaufenden Zentralabschnitt 32 einstückig verbunden. Der Zentralabschnitt 32 weist einen trapezförmigen Oberabschnitt 33 und einen flachen Basisabschnitt 34 auf. Der Flansch 23 kann ferner z. B. mit Haltehaken 24 an seiner Seitenkante zur besseren Festlegung an einer Gehäusewand ausgestattet sein.

Die elektrische Verbindungsanordnung 1 wurde mit den folgenden Schritten hergestellt:
a. Giessen einer einstückigen Leitungsschiene 30 mit mehreren Leitungsbahnen 31 und endseitigen Anschlüssen 11, 21 aus Aluminium-Druckguss, wobei die Anschlüsse 11 an ihrem Ende mittels eines Verbindungssteges 12 einstückig miteinander verbunden werden;
b. Umspritzen der Leitungsschiene 20, in einem Umspritzwerkzeug, das die herzustellende Endform als Kavitäten aufweist unter Ausbildung der zwei endseitigen Anschlussvorrichtungen 10, 20.

## Patentansprüche

1. Elektrische Verbindungsanordnung (1) für einen Motor, umfassend eine erste endseitig angeordnete elektrische Steckverbindung (10) mit elektrischen Anschlüssen (11), wobei die Anschlüsse (11) der Steckverbindung (10) mittels eines Verbindungssteges (12) einstückig miteinander verbunden sind, eine zweite endseitig angeordnete elektrische Steckverbindung (20) mit elektrischen Kontakten (21), die eine die Kontakte (21) umgebende Steckkontur (22) aufweist und ein mit den Anschlüssen (11) und den Kontakten (21) einstückig ausgebildete, die beiden Steckverbindungen (10, 20) verbindende starre Leitungsschiene (30), wobei die Leitungsschiene (30) und zumindest Teile der Steckverbindungen (10, 20) von einem gemeinsamen Isoliermaterial (40) umgeben und zueinander isoliert ausgebildet sind, **dadurch gekennzeichnet, dass** die Anschlüsse (11) als jeweils ein U-förmiger Anschlussbereich (17) mit einem endseitig angebrachten, nach oben ragendem Kontaktteil (18) zur Erzielung eines Toleranzausgleichs ausgebildet sind, so dass Toleranzen und auch Bewegungen sowohl in als auch quer zur Erstreckungsrichtung der elektrischen Verbindungsanordnung abgefangen werden können.

2. Elektrische Verbindungsanordnung (1) nach Anspruch 1, wobei die Leitungsschiene (30) mehrere Leitungsbahnen (31) aufweist, wobei die Leitungsbahnen (31) jeweils an ihrem einen Ende einstückig mit einem der Anschlüsse (11) und jeweils an ihrem anderen Ende einstückig mit einem der Kontakte (21) ausgebildet ist.

3. Elektrische Verbindungsanordnung (1) nach Anspruch 2, wobei das Isoliermaterial (40) auch zwischen den Leitungsbahnen (30) die Leitungsbahnen (30), diese umschließend vorhanden ist.

4. Elektrische Verbindungsanordnung (1) nach Anspruch 1, 2 oder 3, wobei die Leitungsschiene (30) mit dem Isoliermaterial (40) mittels eines Kunststoffspritzverfahren umspritzt wurde.

5. Elektrische Verbindungsanordnung (1) nach Anspruch 1, wobei gekennzeichnet, dass zwischen dem Verbindungssteg (12) und den jeweiligen Anschlüsse (11) bestimmungsgemäß eine Sollbruchstelle (13) vorgesehen ist.

6. Elektrische Verbindungsanordnung (1) nach einem der vorhergehenden Ansprüche, wobei die Leitungsschiene (30) als starre Leitungsschiene, vorzugsweise als eine aus Aluminium-Druckgussmaterial gegossene starre Leitungsschiene ausgebildet ist.

7. Elektrische Verbindungsanordnung (1) nach einem der vorhergehenden Ansprüche, wobei die Steckverbindung (20) eine die Kontakte (21) umgebende Steckkontur (22) umfasst, die aus einem Isoliermaterial, vorzugsweise einstückig mit dem Isoliermaterial (40) ausgebildet wird.

8. Elektrische Verbindungsanordnung (1) nach einem der vorhergehenden Ansprüche, wobei die Steckverbindung (20) einen flachen Flansch (23) aufweist, an den sich eine mit dieser einstückig ausgebildeten Steckkontur (22) anschließt, welche einen Aufnahmeraum für die Kontakte (21) bildet und stirnseitig über die Kontakte (21) hervorsteht.

9. Elektrische Verbindungsanordnung (1) nach einem der vorhergehenden Ansprüche, wobei die Leitungsschiene (30) als eine von dem Isoliermaterial (40) umfangsgeschlossene, sich entlang einer Erstreckungsrichtung (S) in Längsrichtung erstreckende, im Wesentlichen stabförmige Form aufweist.

10. Verfahren zum Herstellen einer elektrischen Verbindungsanordnung (1) nach einem der vorhergehenden Ansprüche 1 bis 9, mit den folgenden Schritten:
a. Herstellen einer einstückigen Leitungsschiene (30) mit mehreren Leitungsbahnen (31) und eine erste endseitig angeordnete elektrische Steckverbindung (10) mit elektrischen Anschlüssen (11) sowie eine zweite endseitig angeordnete elektrische Steckverbindung (20) mit elektrischen Kontakten (21), wobei die Anschlüsse (11) als jeweils ein U-förmiger Anschlussbereich (17) mit einem endseitig angebrachten, nach oben ragendem Kontaktteil (18) zur Erzielung eines Toleranzausgleichs ausgebildet sind, so dass Toleranzen und auch Bewegungen sowohl in als auch quer zur Erstreckungsrichtung abgefangen werden können;
b. Umspritzen der Leitungsschiene (20) zur gegenseitigen Isolierung der Leitungsbahnen (31) untereinander und zur Ausbildung von der zwei endseitigen Steckverbindungen (10, 20).

11. Verfahren gemäß Anspruch 10, wobei eine der Steckverbindungen (10, 20) mit einer Steckkontur (22) ausgebildet wird, welche einen Aufnahmeraum für die Anschlüsse (21) ausbildet und stirnseitig über die Anschlüsse (21) hervorsteht.

12. Verfahren gemäß Anspruch 10 oder 11, wobei eine der Steckverbindungen (10, 20) mit einer Anschlusskontur mit einer stirnseitigen Flachseite (16) ausbildet aus der die Anschlüsse (11) stirnseitig herausragen.

13. Verfahren gemäß einem der Ansprüche 10 bis 12, wobei in Schritt a) zwischen dem Verbindungssteg (12) und den Anschlüssen (11) eine Sollbruchstelle vorgesehen wird.

## Claims

1. Electrical connection arrangement (1) for a motor, comprising a first end-side electrical connector (10) with electrical connections (11), wherein the connections (11) of the connector (10) are integrally connected with each other by means of a connecting bar (12), a second end-side electrical connector (20) with electrical contacts (21), which has a plug contour (22) surrounding the contacts (21), and a rigid power rail (30) integrally formed with the connectors (11) and the contacts (21), which connects the two connectors (10, 20), wherein the power rail (30) and at least portions of the connectors (10, 20) are surrounded by a common insulating material (40) and are formed isolated from each other, **characterized in that** the connections (11) are each formed as a U-shaped connection region (17) with an end-sided, upward-facing contact portion (18) designed to achieve a tolerance compensation, such that tolerances and also movements can be balanced both in and across the extension direction of the electrical connection arrangement.

2. Electrical connection arrangement (1) according to claim 1, wherein the power rail (30) has multiple conducting tracks (31), wherein each conducting track (31) at its one end is integrally formed with one of the connections (11) and at its other end is integrally formed with one of the contacts (21).

3. Electrical connection arrangement (1) according to claim 2, wherein the insulating material (40) is also present between the conducting tracks (30) such that it surrounds the conducting tracks (30).

4. Electrical connection arrangement (1) according to claim 1, 2 or 3, wherein the power rail (30) was overmoulded with the insulating material (40) by means of a plastic injection method.

5. Electrical connection arrangement (1) according to claim 1, wherein a predefined breaking point (13) is provided between the connecting bar (12) and the respective connections (11), as mandated.

6. Electrical connection arrangement (1) according to any one of the preceding claims, wherein the power rail (30) is formed as a rigid power rail, preferably as a rigid power rail cast from aluminium die casting material.

7. Electrical connection arrangement (1) according to any one of the preceding claims, wherein the connector (20) comprises a plug contour (22) surrounding the contacts (21), which is formed from an insulating material, preferably integrally with the insulating material (40).

8. Electrical connection arrangement (1) according to any one of the preceding claims, wherein the connector (20) has a flat flange (23) adjoined by an integrally formed plug contour (22) which forms a receiving space for the contacts (21) and protrudes beyond the contacts (21) on the front end.

9. Electrical connection arrangement (1) according to any one of the preceding claims, wherein the power rail (30) has an essentially rod-shaped form circumferentially surrounded by the insulating material (40) and extending along an extension direction (S) in the longitudinal direction.

10. Method for producing an electrical connection arrangement (1) according to any one of the preceding claims 1 to 9, having the following steps:
a. producing a one-piece power rail (30) with multiple conducting tracks (31) and a first end-sided electrical connector (10) with electrical connections (11) and a second end-sided electrical connector (20) with electrical contacts (21), wherein the connections (11) are each formed as a U-shaped connection region (17) with an end-sided, upward-facing contact portion (18) designed to achieve a tolerance compensation, such that tolerances and also movements can be balanced both in and across the extension direction;
b. overmoulding the power rail (20) for mutual insulation of the conducting tracks (31) against each other and for forming the two end-side connectors (10, 20).

11. Method according to claim 10, wherein one of the connectors (10, 20) is formed with a plug contour (22) which forms a receiving space for the connections (21) and protrudes beyond the connections (21) on the front end.

12. Method according to claim 10 or 11, wherein one of the connectors (10, 20) forms a flat front end (16) with a connection contour, from which the connections (11) protrude on the front end.

13. Method according to any one of claims 10 to 12, wherein a predefined breaking point is provided between the connecting bar (12) and the connections (11) in step a).

## Revendications

1. Ensemble de raccordement électrique (1) pour un moteur, comprenant une première connexion enfichable (10) électrique disposée côté extrémité avec des bornes électriques (11), dans lequel les bornes (11) de la connexion enfichable (10) sont reliées entre elles d'un seul tenant au moyen d'une entretoise de connexion (12), une seconde connexion enfichable (20) électrique disposée côté extrémité avec des contacts (21) électriques, qui présente un contour d'enfichage (22) entourant les contacts (21), et un rail conducteur (30) rigide réalisé d'un seul tenant avec les bornes (11) et les contacts (21), reliant les deux connexions enfichables (10, 20), dans lequel le rail conducteur (30) et au moins des parties des connexions enfichables (10, 20) sont entourés par un matériau isolant (40) commun et sont réalisés de manière isolée les uns par rapport aux autres, **caractérisé en ce que** les bornes (11) sont réalisées en tant que respectivement une zone de raccordement (17) en forme de U avec une partie de contact (18) installée côté extrémité, dépassant vers le haut pour obtenir une compensation de tolérance de sorte que des tolérances et des mouvements également peuvent être interceptés à la fois dans et de manière transversale au sens d'extension de l'ensemble de connexion électrique.

2. Ensemble de connexion électrique (1) selon la revendication 1, dans lequel le rail conducteur (30) présente plusieurs pistes conductrices (31), dans lequel les pistes conductrices (31) sont réalisées respectivement sur une extrémité d'un seul tenant avec une des bornes (11) et respectivement sur leur autre extrémité d'un seul tenant avec un des contacts (21).

3. Ensemble de connexion électrique (1) selon la revendication 2, dans lequel le matériau isolant (40) est présent également entre les pistes conductrices (30) tout en entourant les pistes conductrices (30).

4. Ensemble de connexion électrique (1) selon la revendication 1, 2 ou 3, dans lequel le rail conducteur (30) a été enrobé par pulvérisation du matériau isolant (40) au moyen d'un procédé de pulvérisation de matière plastique.

5. Ensemble de connexion électrique (1) selon la revendication 1, dans lequel conformément à l'usage prévu, un point de rupture théorique (13) est prévu entre l'entretoise de connexion (12) et les bornes (11) respectives.

6. Ensemble de connexion électrique (1) selon l'une quelconque des revendications précédentes, dans lequel le rail conducteur (30) est réalisé en tant que rail conducteur rigide, de préférence en tant qu'un rail conducteur rigide coulé à partir d'un matériau coulé sous pression à base d'aluminium.

7. Ensemble de connexion électrique (1) selon l'une quelconque des revendications précédentes, dans lequel la connexion enfichable (20) comprend un contour d'enfichage (22) entourant les contacts (21), qui est réalisé à partir d'un matériau isolant, de préférence d'un seul tenant avec le matériau isolant (40).

8. Ensemble de connexion électrique (1) selon l'une quelconque des revendications précédentes, dans lequel la connexion enfichable (20) présente une bride (23) plate, à laquelle se raccorde un contour d'enfichage (22) réalisé avec celle-ci d'un seul tenant, lequel forme un espace de logement pour les contacts (21) et fait saillie côté frontal des contacts (21).

9. Ensemble de connexion électrique (1) selon l'une quelconque des revendications précédentes, dans lequel
le rail conducteur (30) présente une forme sensiblement en bâton fermée en périphérie par le matériau isolant (40), s'étendant dans le sens longitudinal le long d'un sens d'extension (S).

10. Procédé de fabrication d'un ensemble de connexion électrique (1) selon l'une quelconque des revendications précédentes 1 à 9, avec les étapes suivantes :
a. de fabrication d'un rail conducteur (30) d'un seul tenant avec plusieurs pistes conductrices (31) et d'une première connexion enfichable (10) électrique disposée côté extrémité avec des bornes (11) électriques ainsi que d'une seconde connexion enfichable (20) électrique disposée côté extrémité avec des contacts (21) électriques, dans lequel les bornes (11) sont réalisées en tant que respectivement une zone de raccordement (17) en forme de U avec une partie de contact (18) installée côté extrémité, dépassant vers le haut pour obtenir une compensation de tolérance de sorte que des tolérances et des mouvements également peuvent être interceptés à la fois dans et de manière transversale au sens d'extension ;
b. d'enrobage par pulvérisation du rail conducteur (20) pour l'isolation mutuelle des pistes conductrices (31) entre elles et pour la réalisation des deux connexions enfichables (10, 20) côté extrémité.

11. Procédé selon la revendication 10, dans lequel une des connexions enfichables (10, 20) est réalisée avec un contour d'enfichage (22), lequel réalise un espace de logement pour les bornes (21) et fait saillie côté frontal des bornes (21).

12. Procédé selon la revendication 10 ou 11, dans lequel une des connexions enfichables (10, 20) réalise avec un contour de raccordement avec un côté plat (16) côté frontal, duquel les bornes (11) dépassent côté frontal.

13. Procédé selon l'une quelconque des revendications 10 à 12, dans lequel dans l'étape a), un point de rupture théorique est prévu entre l'entretoise de connexion (12) et les bornes (11).
